# EUROPEAN PATENT APPLICATION

(11) **EP 4 521 249 A1**
(43) Date of publication of application: **12.03.2025**
(21) Application number: 24190136.2
(22) Date of filing: 22.07.2024
(51) Int. Cl.: G06F 9/50, H04L 41/0895, H04L 41/0897, H04L 67/143, H04L 67/1036

(54) **GRACEFULLY TERMINATING CONTAINER INSTANCES**

(30) Priority: 14.08.2023 FI 20235909
(71) Applicant: Nokia Solutions and Networks Oy, 02610 Espoo (FI)
(72) Inventor: ROTTER, Vilmos Csaba, Pomaz (HU); OROSZ, Bence, Budapest (HU); CSEH, Viktor, Nagyk rös (HU); VAN DO, Tien, Budapest (HU)
(74) Representative: Nokia EPO representatives

(57) **Abstract**

Method comprising:
receiving an instruction to reduce a number of resources in a fully-used role to an intended reduced number of resources in the fully-used role;
selecting one or more of the resources in the fully-used role, wherein the one or more resources are selected such that the number of resources in the fully-used role becomes the intended reduced number;
transitioning a role of the selected resources from the fully-used role to the transitional role,
informing a scheduling device that the role of the resources transitions to the transitional role;
receiving an indication that a first resource of the resources in the transitional role does not carry any traffic;
informing a management device of the resources and the scheduling device that the role of the first resource transitions to the on-the-shelf role in response to receiving the indication; wherein
for each of the resources, the respective resource being in the on-the-shelf role indicates that the respective resource does not carry any traffic;
the scheduling device is responsible for scheduling traffic on the resources;
the management device is responsible for a life cycle of the resources.

## Description

### Technical Field

The present disclosure relates to containers and/or VMs.

### Abbreviations

- 3GPP: 3^{rd} Generation Partnership Project
- 5G/6G/7G: 5^{th}/6^{th}/7^{th} Generation
- API: Application Programming Interface
- CISM: Container Infrastructure Service Management
- cHPA: custom HPA
- CNF: Containerized (or Cloud Native) Network Function
- CRI: Container Runtime Interface
- CRM: Container Runtime Management
- ETSI: European Telecommunications Standards Institute
- HPA: Horizontal Pod Autoscaler
- ID: Identifier
- IMS: IP Multimedia Subsystem
- IP: Internet Protocol
- MANO: MAnagement and Orchestration
- MASCAS: MAnagement of SCaling States for Stateful Applications
- NFV: Network Function Virtualization
- QoS: Quality of Service
- REST: Representational State Transfer
- SIP: Session Initiation Protocol
- TC: Telecommunication Controller
- UUID: Universally Unique Identifier
- VIM: Virtual Infrastructure Manager
- VM: Virtual Machine
- VNF: Virtualized Network Function
- VNFC: Virtualized Network Function Container
- VNFFG: VNF Forwarding Graph
- VNFM: Virtualized Network Function Management

### Background

Network services or applications may be implemented in a virtualised environment and run as a virtual function, either in VM or container environment ("resources"). Typically, there is a management framework in place, which is responsible for the service life-cycle operations, either in a VM or containerised environment. In the VM environment, MANO architecture may be considered as a typical management framework implemented for all VM-managed services. In a containerised environment, there are multiple solutions (such as Kubernetes) for container management.

Cloud-native network functions are embedded in containers, and some containers can be grouped into a deployable computing unit called a Pod in the Kubernetes environment. One Pod runs a single instance of a specific application (e.g., Telco service/applications) component.

ETSI has proposed Kubernetes as Container Infrastructure Service Management (CISM) (ETSI GR NFV-IFA 029) to allow the realization of network services in a cloud-native manner where a VNFC instance corresponds to the smallest manageable container infrastructure object (Pod) of Kubernetes (ETSI GR NFV-IFA 029). A main task of CISM is the lifecycle management of containers, i.e., termination and instantiation of containers. CISM may have an additional function of performing scaling. However, to do scaling correctly, the cooperation of other components (e.g., monitoring traffic, algorithms to compute the needed number of containers) is required. CISM does not have any influence on how traffic is scheduled. This is a task of load balancers that are controlled by load balancer controllers.

### Summary

It is an object to improve the prior art.

According to a first aspect, there is provided an apparatus comprising:
one or more processors, and memory storing instructions that, when executed by the one or more processors, cause the apparatus to perform:
receiving an instruction to reduce a number of resources in a fully-used role carrying instances of a virtual network function to an intended reduced number of resources in the fully-used role carrying instances of the virtual network function;
selecting one or more of the resources in the fully-used role, wherein the one or more resources are selected such that the number of resources in the fully-used role becomes the intended reduced number of resources if the selected resources transition from the fully-used role to a transitional role;
transitioning a role of the selected one or more resources from the fully-used role to the transitional role, wherein a reserved role comprises the transitional role and an on-the-shelf role,
informing a scheduling device that the role of the one or more resources transitions to the transitional role in response to transitioning the role of the selected one or more resources from the fully-used role to the transitional role;
receiving an indication that a first resource of the one or more resources in the transitional role does not carry any traffic;
informing a management device of the resources and the scheduling device that the role of the first resource transitions to the on-the-shelf role in response to receiving the indication that the first resource does not carry any traffic; wherein
for each of the resources, the respective resource being in the on-the-shelf role indicates that the respective resource does not carry any traffic;
according to configuration information available to the apparatus, the scheduling device is responsible for scheduling traffic on the one or more resources;
according to the configuration information, the management device is responsible for a life cycle of the one or more resources.

The instructions, when executed by the one or more processors, may further cause the apparatus to perform
informing the management device that the role of the one or more resources transitions to the transitional role in response to transitioning the role of the selected one or more resources from the fully-used role to the transitional role.

The instructions, when executed by the one or more processors, may further cause the apparatus to perform
receiving a second instruction to increase the number of the resources in the fully-used role carrying instances of the virtual network function to an intended increased number of resources in the fully-used role carrying instances of the virtual network function;
determining a number difference between the intended increased number of resources in the fully-used role carrying instances of the virtual network function and the number of the resources in the fully-used role carrying instances of the virtual network function;
choosing one or more of the resources in the reserved role, wherein the number of the chosen resources is equal to or smaller than the number difference;
transitioning the chosen one or more of the resources from the reserved role to the fully-used role;
informing the scheduling device and the management device that the chosen one or more of the resources transition from the reserved role to the fully-used role in response to the transitioning the chosen one or more of the resources from the reserved role to the fully-used role.

The instructions, when executed by the one or more processors, may further cause the apparatus to perform, for each of the chosen one or more resources:
checking whether the respective resource transitions from the transitional role to the fully-used role;
inhibiting the informing the management device that the respective resource transitions from the reserved role to the fully-used role in response to checking that the respective resource transitions from the transitional role to the fully-used role.

The number of the chosen resources may be smaller than the number difference, and the instructions, when executed by the one or more processors, may further cause the apparatus to perform
instructing the management device to activate one or more resources and assigning the fully-used role to the activated one or more resources such that the number of the resources in the fully-used role carrying instances of the virtual network function becomes equal to the intended increased number;
informing the scheduling device on the activated one or more resources in the fully-used role.

A total number of resources in the reserved role at a time when the one or more resources in the reserved role are chosen may be smaller than the number difference.

The instructions, when executed by the one or more processors, may further cause the apparatus to perform
informing a device to be informed that the role of one of the resources transitions from a first role to a second role different from the first role, wherein the first role comprises any of the fully-used role, the transitional role, and the on-the-shelf role, and the second role comprises any of the fully-used role, the transitional role, and the on-the-shelf role.

The instructions, when executed by the one or more processors, may further cause the apparatus to perform:
receiving a subscription for a notification from the device to be informed;
the informing the device to be informed that the role of the one of the resources transitions from the first role to the second role by issuing the notification.

The device to be informed may comprise the one of the resources.

The instructions, when executed by the one or more processors, may further cause the apparatus to perform, for each of the one or more resources:
checking whether the respective resource is in the on-the shelf role;
inhibiting to instruct the management device to destroy the respective resource in response to checking that the respective resource is not in the on-the-shelf role.

The instructions, when executed by the one or more processors, may further cause the apparatus to perform, for each of the one or more resources:
instructing the management device to gracefully destroy the respective resource in response to checking that the respective resource is in the on-the-shelf role.

According to a second aspect, there is provided an apparatus comprising:
one or more processors, and memory storing instructions that, when executed by the one or more processors, cause the apparatus to perform:
receiving an information that a resource transitions to a role;
scheduling traffic for the resource according to the role in response to receiving the information that the resource transitions to the role; wherein
if the role is a fully-used role, it is allowed to schedule new traffic and existing traffic for the resource;
if the role is a transitional role, it is allowed to schedule existing traffic for the resource and inhibited to schedule new traffic for the resource;
if the role is an on-the-shelf role, it is inhibited to schedule existing traffic for the resource and inhibited to schedule new traffic for the resource.

According to a third aspect, there is provided an apparatus comprising:
one or more processors, and memory storing instructions that, when executed by the one or more processors, cause the apparatus to perform:
receiving an information that a resource transitions to a role;
managing a life cycle of the resource according to the role in response to receiving the information that the resource transitions to the role; wherein
if the role is a non-on-the-shelf role, it is inhibited to de-activate the resource;
if the role is an on-the-shelf role different from the non-on-the-shelf role, it is allowed to de-activate the resource.

The non-on-the-shelf role may comprise a fully-used role and a transitional role different from the fully-used role.

According to a fourth aspect, there is provided an apparatus comprising:
one or more processors, and memory storing instructions that, when executed by the one or more processors, cause the apparatus to perform:
informing an information device that a resource does not carry any traffic.

The instructions, when executed by the one or more processors, may further cause the apparatus to perform
receiving an information that the resource is in one of a transitional role or a non-transitional role different from the transitional role;
inhibiting the informing the information device that the resource does not carry any traffic in response to receiving the information that the resource is in the non-transitional role.

The instructions, when executed by the one or more processors, may further cause the apparatus to perform
subscribing at the information device for a notification; wherein
the notification comprises the information that the resource is in one of the fully-used role or the transitional role or the on-the-shelf role.

The non-transitional role may comprise a fully-used role and an on-the-shelf role different from the fully-used role.

According to a fifth aspect, there is provided a method comprising:
receiving an instruction to reduce a number of resources in a fully-used role carrying instances of a virtual network function to an intended reduced number of resources in the fully-used role carrying instances of the virtual network function;
selecting one or more of the resources in the fully-used role, wherein the one or more resources are selected such that the number of resources in the fully-used role becomes the intended reduced number of resources if the selected resources transition from the fully-used role to a transitional role;
transitioning a role of the selected one or more resources from the fully-used role to the transitional role, wherein a reserved role comprises the transitional role and an on-the-shelf role,
informing a scheduling device that the role of the one or more resources transitions to the transitional role in response to transitioning the role of the selected one or more resources from the fully-used role to the transitional role;
receiving an indication that a first resource of the one or more resources in the transitional role does not carry any traffic;
informing a management device of the resources and the scheduling device that the role of the first resource transitions to the on-the-shelf role in response to receiving the indication that the first resource does not carry any traffic; wherein
for each of the resources, the respective resource being in the on-the-shelf role indicates that the respective resource does not carry any traffic;
according to configuration information available to an apparatus performing the method, the scheduling device is responsible for scheduling traffic on the one or more resources;
according to the configuration information, the management device is responsible for a life cycle of the one or more resources.

The method may further comprise
informing the management device that the role of the one or more resources transitions to the transitional role in response to transitioning the role of the selected one or more resources from the fully-used role to the transitional role.

The method may further comprise
receiving a second instruction to increase the number of the resources in the fully-used role carrying instances of the virtual network function to an intended increased number of resources in the fully-used role carrying instances of the virtual network function;
determining a number difference between the intended increased number of resources in the fully-used role carrying instances of the virtual network function and the number of the resources in the fully-used role carrying instances of the virtual network function;
choosing one or more of the resources in the reserved role, wherein the number of the chosen resources is equal to or smaller than the number difference;
transitioning the chosen one or more of the resources from the reserved role to the fully-used role;
informing the scheduling device and the management device that the chosen one or more of the resources transition from the reserved role to the fully-used role in response to the transitioning the chosen one or more of the resources from the reserved role to the fully-used role.

The method may further comprise, for each of the chosen one or more resources:
checking whether the respective resource transitions from the transitional role to the fully-used role;
inhibiting the informing the management device that the respective resource transitions from the reserved role to the fully-used role in response to checking that the respective resource transitions from the transitional role to the fully-used role.

The number of the chosen resources may be smaller than the number difference, and the method may further comprise
instructing the management device to activate one or more resources and assigning the fully-used role to the activated one or more resources such that the number of the resources in the fully-used role carrying instances of the virtual network function becomes equal to the intended increased number;
informing the scheduling device on the activated one or more resources in the fully-used role.

A total number of resources in the reserved role at a time when the one or more resources in the reserved role are chosen may be smaller than the number difference.

The method may further comprise
informing a device to be informed that the role of one of the resources transitions from a first role to a second role different from the first role, wherein the first role comprises any of the fully-used role, the transitional role, and the on-the-shelf role, and the second role comprises any of the fully-used role, the transitional role, and the on-the-shelf role.

The method may further comprise
receiving a subscription for a notification from the device to be informed; wherein
the informing the device to be informed that the role of the one of the resources transitions from the first role to the second role may be performed by issuing the notification.

The device to be informed may comprise the one of the resources.

The method may further comprise, for each of the one or more resources:
checking whether the respective resource is in the on-the shelf role;
inhibiting to instruct the management device to destroy the respective resource in response to checking that the respective resource is not in the on-the-shelf role.

The method may further comprise, for each of the one or more resources:
instructing the management device to gracefully destroy the respective resource in response to checking that the respective resource is in the on-the-shelf role.

According to a sixth aspect, there is provided a method comprising:
receiving an information that a resource transitions to a role;
scheduling traffic for the resource according to the role in response to receiving the information that the resource transitions to the role; wherein
if the role is a fully-used role, it is allowed to schedule new traffic and existing traffic for the resource;
if the role is a transitional role, it is allowed to schedule existing traffic for the resource and inhibited to schedule new traffic for the resource;
if the role is an on-the-shelf role, it is inhibited to schedule existing traffic for the resource and inhibited to schedule new traffic for the resource.

According to a seventh aspect, there is provided a method comprising:
receiving an information that a resource transitions to a role;
managing a life cycle of the resource according to the role in response to receiving the information that the resource transitions to the role; wherein
if the role is a non-on-the-shelf role, it is inhibited to de-activate the resource;
if the role is an on-the-shelf role different from the non-on-the-shelf role, it is allowed to de-activate the resource.

The non-on-the-shelf role may comprise a fully-used role and a transitional role different from the fully-used role.

According to an eighth aspect, there is provided a method comprising:
informing an information device that a resource does not carry any traffic.

The method may further comprise
receiving an information that the resource is in one of a transitional role or a non-transitional role different from the transitional role;
inhibiting the informing the information device that the resource does not carry any traffic in response to receiving the information that the resource is in the non-transitional role.

The method may further comprise
subscribing at the information device for a notification; wherein
the notification may comprise the information that the resource is in one of the fully-used role or the transitional role or the on-the-shelf role.

The non-transitional role may comprise a fully-used role and an on-the-shelf role different from the fully-used role.

According to each of the first to eighth aspects, each of the resources may comprise a container or a virtual machine.

Each of the methods of the fifth to eighth aspects may be a method of graceful terminating a resource.

According to a ninth aspect, there is provided a computer program product comprising a set of instructions which, when executed on an apparatus, is configured to cause the apparatus to carry out the method according to any of the fifth to eighth aspects. The computer program product may be embodied as a computer-readable medium or directly loadable into a computer.

According to some example embodiments, at least one of the following advantages may be achieved:
- Energy may be saved while QoS may be ensured.

### Brief description of the drawings

Further details, features, objects, and advantages are apparent from the following detailed description of the preferred example embodiments which is to be taken in conjunction with the appended drawings, wherein:
Fig. 1 shows MASCAS interfaces towards the NFV MANO, Kubernetes frameworks according to some example embodiments;
Fig. 2 shows an example of the interaction among Load Balancer, MASCAS and Role Information according to some example embodiments;
Fig. 3 shows a data structure of role information according to some example embodiments;
Fig. 4 shows a subscription to the information regarding the changes of the role information according to some example embodiments;
Fig. 5 shows an implementation of the role information label in Kubernetes according to some example embodiments;
Fig. 6A shows a workflow for scaling in according to some example embodiments;
Fig. 6B shows a workflow for scaling in according to some example embodiments;
Fig. 7A shows a workflow for scaling out according to some example embodiments;
Fig. 7B shows a workflow for scaling out according to some example embodiments;
Fig. 8A shows a workflow for scaling out according to some example embodiments;
Fig. 8B shows a workflow for scaling out according to some example embodiments;
Fig. 9 shows role transitions according to some example embodiments;
Fig. 10 shows an apparatus according to an example embodiment;
Fig. 11 shows a method according to some example embodiments;
Fig. 12 shows an apparatus according to an example embodiment;
Fig. 13 shows a method according to an example embodiment;
Fig. 14 shows an apparatus according to an example embodiment;
Fig. 15 shows a method according to an example embodiment;
Fig. 16 shows an apparatus according to an example embodiment;
Fig. 17 shows a method according to an example embodiment; and
Fig. 18 shows an apparatus according to an example embodiment.

### Detailed description of certain example embodiments

Herein below, certain example embodiments are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the disclosure to the disclosed details.

Moreover, it is to be understood that the apparatus is configured to perform the corresponding method, although in some cases only the apparatus or only the method are described.

Operators may implement service provisioning (e.g., 5G core, multimedia calls, etc.) as network services comprising software components (called VNFs) instantiated in service providers' cloud infrastructure (if a VNF instance is initiated as a cloud-native entity it is a CNF instance).

Horizontal scaling is used for controlling that the resources of the network service correspond to the demand of the users. Horizontal scaling manages the number of application instances depending on the need (changes in traffic patterns or load from customers). Horizontal Pod autoscaler (HPA) is the well-known solution implemented in Kubernetes to give a response to changing load (i.e., deploy more Pods is response to increased load, terminate some Pods through the Kubernetes declarative description called Deployment in response to decreased load (it provides an API to describe a desired state and the Kubernetes Deployment Controller changes to reach the desired state).

ETSI does not specify other methods for the graceful termination of VNFCs than a time-out based one. The time-out period may be set from external. However, setting the timeout parameter is not a trivial task. If the session time is larger than the timeout value, the termination of the instance due to the time-out may cause QoS degradation. The same applies for the termination of the instance after a random selection.

In telco environments, quality of service should be guaranteed for customers according to service level agreements. From that point of view, the number of resources should be appropriately chosen. Furthermore, resource usage and energy consumption should be minimized in order to reduce costs for operators.

To ensure QoS and efficient resource usage at the same time, operators may apply scaling mechanisms to control the number of launched instances in response to the dynamic change of subscribers' traffic. For keeping the number of CNF instances of a network service at a minimum level where QoS is not compromised, a dynamic adjustment (horizontal scaling) of the number of instances based on the service usage may be applied. If the usage is increasing, e.g., the number of user requests is increasing, more container instances may be added to the system (scale-out), responding in such a way to the increased usage. Usually, this is not problematic: a new instance is added to the system in these cases, and no other actions may be needed.

However, if the usage shows a decreasing pattern, e.g., the number of requests from the users decreases, fewer instances can serve the new load from the users. In this case, one may terminate one (or more) container(s) (scale-in). If the QoS is meant to be maintained, it should be ensured that no active user activity is in the instance intended to be terminated by the scale-in action. Some example embodiments provide a solution to this scale-in problem.

In many CNF de-facto industrial standard orchestration frameworks (like Kubernetes) and other CNF orchestration frameworks, efforts to drive the number of CNF instances are uncoordinated (non-synchronized), which may result in QoS degradation due to the termination of active CNF instances when "scaling in" is needed. Furthermore, the non-availability of domain-knowledge information (active sessions, performance metrics) inside stateful CNF instances for scaling activities in orchestration frameworks may worsen the situation. Some example embodiments provide a method for the controlled termination of CNF instances, while QoS is not degraded.

Some example embodiments provide a solution for the graceful termination of stateful VNFC instances. In particular, such a graceful termination may be useful when the number of stateful VNFC instances should be managed (scaled) in response to the customers' traffic. Some example embodiments may be applied in an environment where VNFC instances are mapped to the smallest manageable container infrastructure object of CISM (for example, Kubernetes) within the NFV MANO framework.

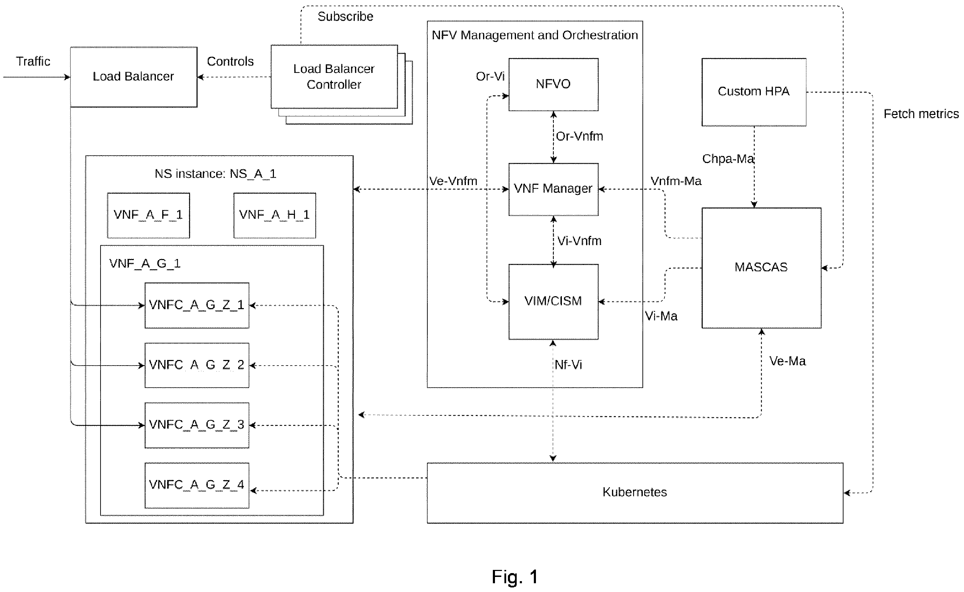

As illustrated in Fig. 1, some example embodiments provide an entity (called MAnagement of SCaling States for Stateful Applications - MASCAS, for example). MASCAS may act as an intermediator between two or more of VNFC instances, CISM, the NFV MANO, Custom HPA, Load Balancer Controllers and applications (running in VNFC instances) to exchange information (explicit information about the end of traffic flows served by VNFC instances and intention about using a specific VNFC). In Fig. 1, the interfaces of MASCAS with NFV MANO are presented.

MASCAS keeps information about VNFC instances to indicate the intentional use of the VNFC instance within the NFV MANO framework (i.e., the role of a VNFC instance concerning users' traffic). The role of a VNFC is "fully-used" if VNF Manager would like to utilize the VNFC instance to handle new and existing traffic, is "transitional" if VNF Manager would like to decrease the number of instances in the "fully-used" role in response to the change of traffic while the VNFC instance still serves existing traffic, is "on-the-shelf" if no new or existing traffic could be scheduled to the VNFC instance. The Load Balancer Controllers receive the role information of instances from MASCAS so Load Balancer Controllers can control Load Balancers to forward traffic according to the roles of the instances. The load balancer controllers control the operation of the load balancers.

Due to MASCAS, the graceful termination of VNFC instances could be performed, and NVFVO may have the full control of instances to provide service commitments through coordination between instances, load balancing and the management of instances (launching and termination).

In the context of MANO, MASCAS may be a component of VNFM.

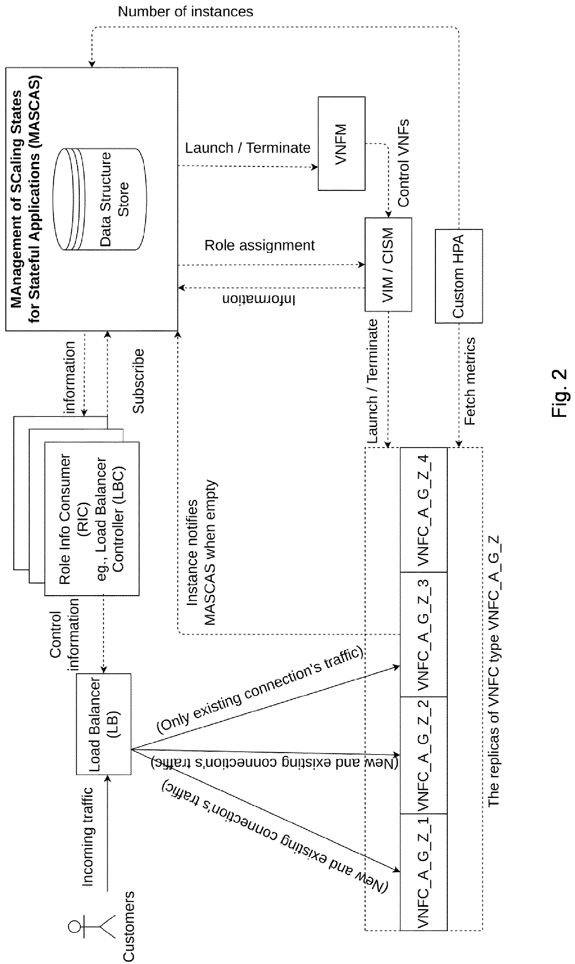

Hereinafter, an example scenario (Fig. 2) is described. Hereinafter, the following nomenclature is used: NS_A is the NS type, while NS_A_1 is a NS instance. VNF_A_G is a VNF type, while VNF_A_G_1 is a VNF instance. VNFC_A_G_Z is a VNFC type, while an instance of the VNFC type is VNFC_A_G_Z_1. The example scenario of Fig. 2 is based on the example embodiment of Fig. 1, where network service (NS) NS_A_1 is constructed from VNF instances (VNF_A_F_1, VNF_A_G_1 and VNF_A_H_1) to provide a service for subscribers. VNF instance VNF_A_G_1 comprises VNFC instances of type VNFC_A_G_Z (instances VNFC_A_G_Z_1, VNFC_A_G_Z_2, VNFC_A_G_Z_3 and VNFC_A_G_Z_4) that are deployed as Pods and managed by Kubernetes as described in the ETSI GR NFV-IFA 029, for example. Container Infrastructure Service Management (CISM) is used to allow the execution of VNF instances in containers. The Container Runtime Management (CRM), the component of CISM, manages containers' resources through the CIS via an interface which may be the Container Runtime Interface (CRI) of Kubernetes.

A NS may comprise several VNF types, and the routing of packets may be specified with Virtual Network Function Forwarding Graph (VNFFG) and Forwarding Paths (see ETSI GR NFV 001 V1.3.1). In some example embodiments, the design and implementation of the specific NS may need at least one stateful VNFC type (i.e., packets/messages with certain identifiers form a flow that should be handled by a specific VNFC instance and of course be routed accordingly in the VNFFG of the NS). Hereinafter, the description focuses on the scaling of stateful CNF instances of one specific VNFC type (for example, VNFC_A_G_Z). Fig. 1 illustrates the NS instance NS_A_1 with stateful VNFC instances (of type VNFC_A_G_Z) that are initiated by the NFVO through CISM and the Container Runtime Interface (CRI) of Kubernetes (as a result of an initialization, the control plane of Kubernetes launches the number of Pods). In addition, a Kubernetes service and Load Balancer(s) may be used to forward packets to an appropriate Pod.

A custom HPA algorithm recommends the appropriate number of instances that serve customer traffic for energy saving and/or reduction of infrastructure use. That is, it is desirable that the system should apply the recommended number of instances to host customer traffic. The custom HPA algorithm provides its recommendation to MASCAS. According to some embodiments, only stateful CNF instances that do not handle traffic are terminated, other CNF instances are not terminated.

Some example embodiments consider at least one of the following aspects:
- The number of instances that handle customer traffic should be equal to the value recommended by the custom HPA algorithm from the viewpoint of resource usage.
- The graceful termination of a specific instance needs a transition because it takes time to arrange the instance from handling new and existing traffic to an epoch when the instance could be terminated.
- It takes booting time to launch and prepare a new instance for the purpose of accepting customer traffic. The increase of customer traffic at certain periods during a day may exceed the capacity of instances in use. Therefore, some instances should be reserved to eliminate the impact of booting time. Note that instances in transition could be interpreted as reserved ones too and may immediately accept traffic.
- The termination of an instance does not impact customers' traffic if the instance does not handle traffic. This information may be used to configure load balancers.

From the viewpoint of resource management and handling traffic, there are three ways regarding the use of an already launched instance: 1) accepts new and existing traffic; 2) only accepts existing traffic during a transition; 3) does not accept traffic and if it is empty, it may be selected for scaling out.

Some example embodiments provide a variable to indicate the intentional use of VNFC instance within the NFV MANO framework (i.e., the role of a VNFC instance concerning users' traffic). The variable regarding the intentional use of a VNFC takes the value
- "fully-used" if VNF Manager would like to utilize the VNFC to handle new and existing traffic,
- "transitional" if VNF Manager would like to decrease the number of instances in the resource in response to the change of traffic and the VNFC instance still serves existing traffic,
- "on-the-shelf" if no new or existing traffic could be scheduled to the VNFC instance.

Note that instances with the transitional role may still handle existing traffic forwarded by Load Balancers. Instances with the transitional role may inform MASCAS once the respective instance observes that there is no traffic, based on the information internal to the instance. Instances with the "on-the-shelf" role do not handle customers' traffic.

The names of the roles are examples. Other names may be used instead.

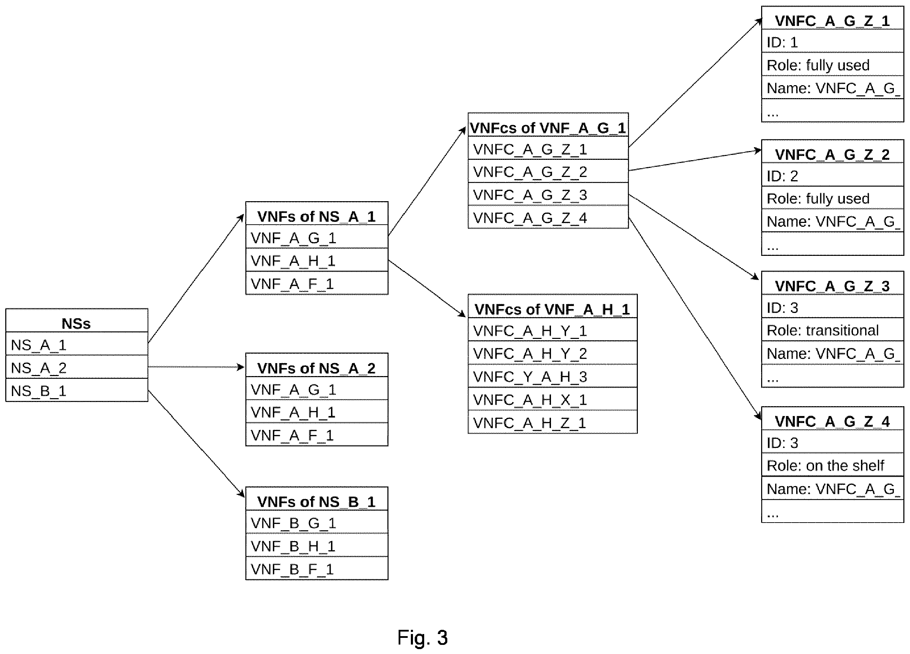

When MASCAS is implemented, an array of records or a linked list could be used (see Fig. 3). As shown in Fig. 3, each NS may be built by a number of VNFs, and each VNF may comprise several VNFCs. Each VNFC may have a different role such as "fully-used", "transitional", or "on-the-shelf".

Components (CISM, HPA, Load Balancer Controller, Load Balancers) exchange information for the tasks of the scaling process (the computation of the number of instances, the launch of new CNF instances, the selection of CNF instances to be terminated). MASCAS may act as an intermediator between VNFC instances, CISM, the NFV MANO, Load Balancer Controllers and applications to exchange explicit information about the end of traffic flows served by VNFC instances, intention about using a specific VNFC, scaling related information and information related to the forwarding rule change of load balancers. The REST API interfaces of MASCAS are summarized in Tables 1, 2 and 3. Entities could register at MASCAS to obtain the change of information stored in MASCAS (see Table 1), they are called Role Information Consumers (RICs). Note that REpresentational State Transfer and an architectural style (REST API -- https://www.openapis.org/) and methods (GET, POST, PUT, PATCH, DELETE) may be applied for the exchange of information between components.

**Table 1: Ve-Ma Interface for Pool Info Consumer (PIC) and MASCAS**

| Endpoint | Method | Description |
|---|---|---|
| /role-info-consumers | GET | returns the subscribed consumers (e.g., LBC) |
| | POST | adds a subscribed consumer's API endpoint that subscribes to role changes. Sends Name and AP endpoint that must be called on the consumer |
| /role-info-consumers/{consumer-uuid} | GET | returns the subscribed consumer (e.g., LBC) |
| | PATC H | update a subscribed consumer's endpoint that changed |
| | DELET | remove a subscribed consumer's API endpoint |
| /role-info-consumers/{consumer-uuid}/roles | GET | returns the current role of the instances |

**Table 2: the Vnfm-Ma Interface for VNFM and MASCAS**

| Endpoint | Method | Description |
|---|---|---|
| /vnfs | GET | returns the instance managers |
| | POST | adds an instance manager's API endpoint that can be called when replica count change is needed. Needs to send an API endpoint* and VNF Instance ID. |
| /vnfs/{vnfInstanceId} | GET | returns the information from VNF |
| | PATCH | update an instance manager's endpoint that changed |
| | DELET E | remove an instance manager's API endpoint |
| /vnfs/{vnfl nstancel d}/status | GET | Returns the status of the VNF (e.g., is there any ongoing scaling etc.) |
| /vnfs/{vnflnstanceld}/vnfcs | GET | returns the provided instances (e.g., Pod) |
| | POST | append an instance that should be managed with MASCAS. |
| | | It must send a Name, Endpoint for metrics and a Json structure that defines the active flows |
| | DELET E | remove an already appended instance |
| /vnfs/{vnflnstanceld}/vnfcs/{vnfclnst anceld} | GET | returns the provided instance (e.g., Pod) |
| /vnfs/{vnfl nstancel d}/vnfcs/{vnfcl nst anceld}/empty | POST | Notify the MASCAS that the instance is empty |
| /vnfs/{vnflnstanceld}/role/on-the-shelf/scale | GET | fetch the information |
| | PATCH | update the replica count |
| | PUT | update the replica count |
| /vnfs/{vnflnstanceld}/role/fully-used/scale | GET | fetch the information |
| | PATCH | update the replica count |
| | PUT | update the replica count |

**Table 3: VI-MA interface for MASCAS and CISM**

| Endpoint | Method | Description |
|---|---|---|
| /api/v1/namespaces/{namespace}/ pods/{pod-name} | GET | Fetch pod info |
| | PATCH | Update pod info |

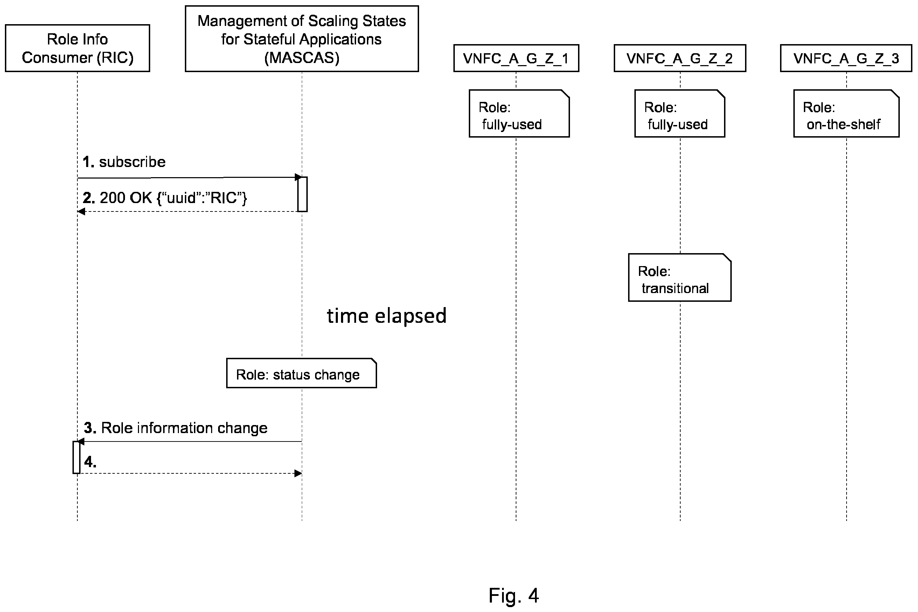

Entities may subscribe for obtaining the information and MASCAS will notify a subscribed entity (e.g., Role Information Consumer) whenever the role information changes, as shown in Fig. 4. The actions in Fig. 4 are as follows:
- Action 1: Role Information Consumer subscribes at MASCAS to express an intention of receiving information about the change of the role information of instances. For example, the subscription could be performed with the REST API POST method as

   ```
POST /role-info-consumers
       {
        "name": "RIC",
        "endpoint":"/api/v1/call-this-when-role-change" }
```
- Action 2: MASCAS accepts the subscription with the instance's uuid (or the unique identifier of the instance) as

   ```
{"uuid":"RIC"}
```
- Action 3: if the use role of instances changes, MASCAS sends a notification to all the subscribed consumers. The notification may be the REST API POST method as

   ```
       POST /api/v1/call-this-when-role-change
       {"fully-used": ["VNFC_A_G_Z_1"],
        "transitional": ["VNFC_A_G_Z_2"],
        "on-the-shelf": ["VNFC_A_G_Z_3"] }
```
- Once Load Balancer Controllers receive the role information of instances from MASCAS, Load Balancer Controllers may instruct Load Balancers to forward traffic according to the roles of the instances.Action 4: All the notified consumers return with 200 OK

In some example embodiments, Role Information Consumer and MASCAS may enforce a filtering mechanism, so a Role Information Consumer gets only necessary information.

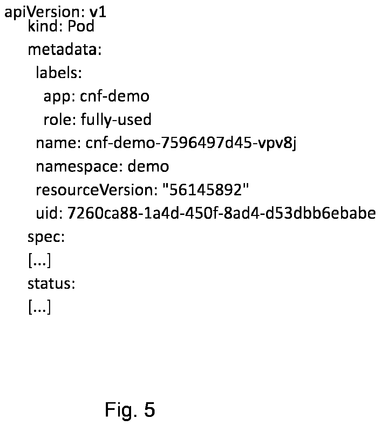

Instances that are not "fully-used" may be termed "reserved instances". The "reserved instances" may help the system to act quickly when additional instances are needed in response to increasing customer traffic. The setting for the number of reserved instances in the system depends on applications and the policies of the operators. For example, the number of reserved instances of type i could be set between a low (Lᵢ) and a high (Hᵢ) threshold. The thresholds may be configurable parameters. Initially, MASCAS may start a procedure to launch Mᵢ +Lᵢ instances and intends to use Mᵢ instances as "fully-used" and Lᵢ instances "on-the-shelf". Mᵢ may be a configurable parameter. Then, MASCAS may inform the subscribed RICs accordingly. If Kubernetes is used as an orchestration framework, we recommend the use of label "role" for annotation of Pods as shown in Fig. 5.

In addition, a "non-transitional" role may comprise the roles "fully-used" and "on-the-shelf". A "non-on-the-shelf" role may comprise the roles "fully-used" and "transitional".

There may be three options concerning how an instance in the transitional role informs MASCAS whether the instance does not handle any traffic.
- Option 1: an instance does not keep the role information inside the instance's memory and always informs MASCAS upon an instant when the instance does not handle any traffic based on the internal information, but MASCAS only processes the information if the instance is in the transitional role kept in MASCAS.
- Options 2 and 3: an instance may keep the role information inside the instance's memory and receive the role information from MASCAS (either directly (option 2) or through the RIC mechanism (option 3)). The instance sends information that it no longer processes any traffic to MASCAS upon a moment when it does not carry any traffic if it is in the transitional role. If the instance is in a non-transitional role the instance does not inform MASCAS that it no longer processes any traffic.

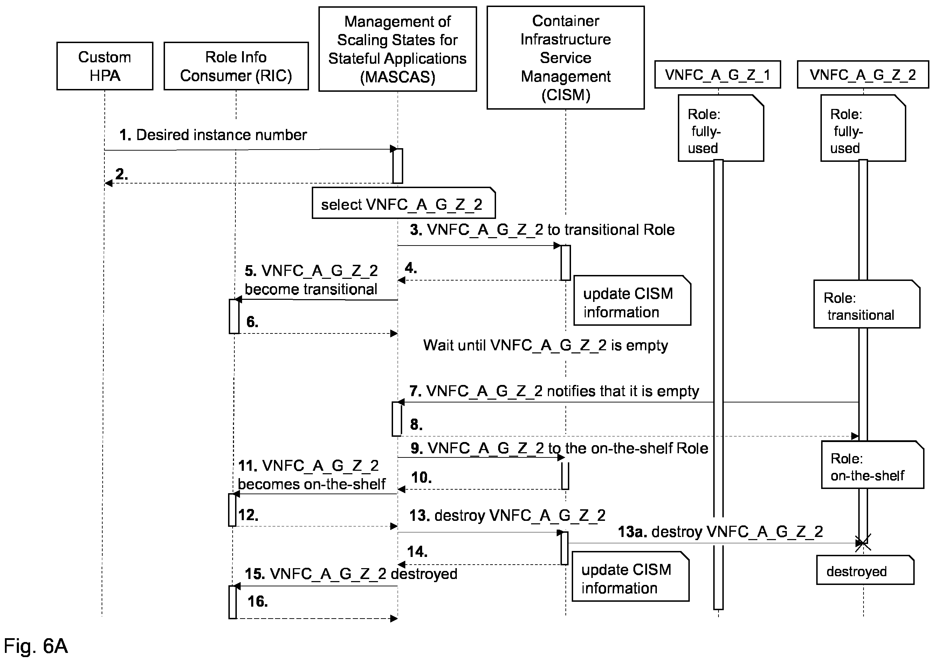

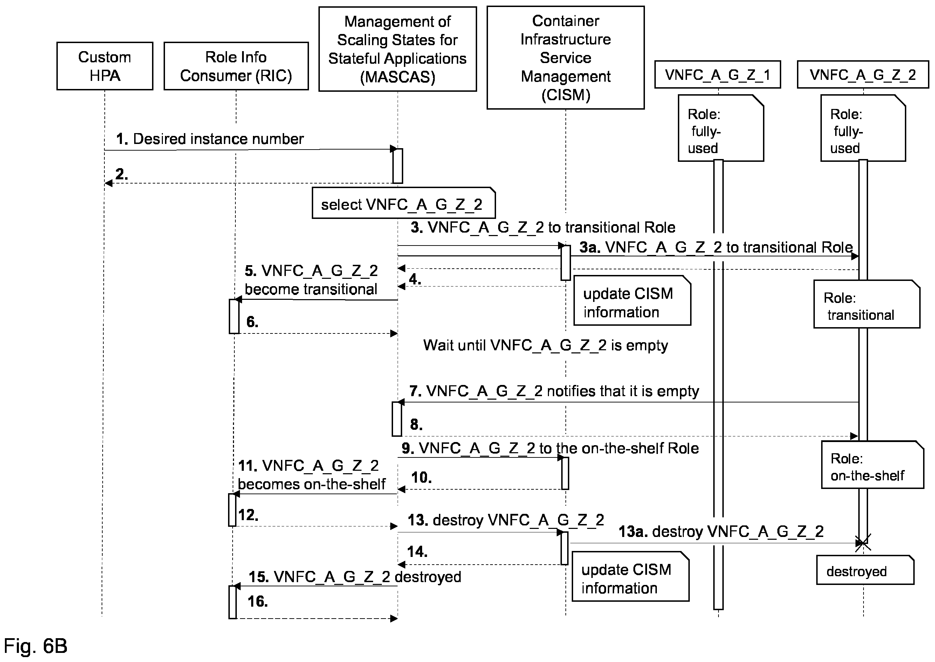

Fig. 6A shows an example cooperation during the "scale in" process for option 1. In the message sequence charts of Figs. 6 to 8, the dashed arrows mean that the message is acknowledged, e.g. "200 OK". The actions are as follows:
- Action 1: Custom HPA sends the recommended number of instances to the MASCAS. For example, the REST API PATCH method template is filled with the following information

   ```
PATCH /vnfs/{vnfInstanceId}/role/fully-used/scale
{
"replicas": 1
}
```

   I.e., since there are two VNFC instances with the fully-used role and Custom HPA requests only one VNFC instance in the "fully-used" role, the number of instances should be reduced.
- Action 2: MASCAS sends the 200 OK response
- Action 3: MASCAS sends a message to CISM to annotate instance VNFC_A_G_Z_2 as transitional from the "on-the-shelf" role.
   For example, a PATCH method could be as follows

   ```
PATCH /api/v1/namespaces/{namespace}/pods/{pod-name}
metadata.labels.role = "transitional"
```
- Action 4: CISM changes the internal information about the role of the instance and acknowledges with the 200 OK message.
- Action 5: MASCAS notifies the subscribed Role Information Consumers using the POST method as

   ```
POST /api/v1/call-this-when-role-change
{
"fully-used": ["VNFC_A_G_Z_1"],
"transitional": ["VNFC_A_G_Z_2"],
"on-the-shelf": ["VNFC_A_G_Z_3"]
}
```
- Action 6: The informed Role Information Consumer responses with the 200 OK message.
- Action 7: After an instance in the transition role, based on the internal information of the instance, decides that it no longer processes any stateful flow, it informs the MASCAS using the POST method template as
   POST mascas.example/api/vnfs/{vnflnstanceld}/vnfcs/{vnfclnstanceld}/empty
- Action 8: MASCAS acknowledges with the 200 OK message.
- Action 9: MASCAS informs CISM that the role of the instance is changed with the PATCH method template as

   ```
PATCH /api/v1/namespaces/{namespace}/pods/{pod-name}
metadata.labels.role = "on-the-shelf"
```
- Action 10: CISM changes the internal information about the role of the instance (updates its internal store based the obtained information) and acknowledges with the 200 OK message.
- Action 11: MASCAS notifies the subscribed Role Information Consumers about the role change with the POST method as

   ```
POST /api/v1/call-this-when-role-change
{
"fully-used": ["VNFC_A_G_Z_1"],
"transitional": [],
"on-the-shelf": ["VNFC_A_G_Z_2","VNFC_A_G_Z_3"] }
```
- Action 12: The notified Role Information Consumer acknowledge with the 200 OK message.
- Action 13: If there are more instances in the "on-the-shelf" role than the high threshold Hᵢ, MASCAS chooses instances to be terminated, and sends a request to CISM to terminate the selected instances.
- Action 13a: CISM terminates the selected instances after having checked that the instance is in the on-the-shelf role.
- Action 14: CISM responses with the 200 OK messages after the successful termination of the selected instances.
- Action 15: MASCAS informs the subscribed Role Information Consumers that instances were terminated using the POST method as

   ```
POST /api/v1/call-this-when-role-change
{
"fully-used": ["VNFC_A_G_Z_1"],
"transitional": [],
"on-the-shelf": ["VNFC_A_G_Z_2"]
}
```
- Action 16: Notified Role Information Consumers acknowledge with the 200 OK message.

In Fig. 6A (and the other message sequence charts of Figs. 4 and 6 to 8), Load Balancer Controllers may act as RIC. Thus, they receive the role information of instances from MASCAS. Accordingly, the Load Balancer Controllers may instruct the Load Balancers to forward traffic according to the roles of the instances.

The workflow of Fig. 6A ensures that instances that are serving customer traffic will not be terminated.

Fig. 6B shows a message sequence chart corresponding to that of Fig. 6A, but for option 2. Accordingly, MASCAS informs the respective instance about its role change (action 3a). Typically, MASCAS sends the role information directly to the respective instance, as shown in Fig. 6B. Only if the instance is in the transitional role, the instance informs MASCAS when it is empty (action 7). In the example of Fig. 6B, MASCAS need not to inform the instance on the role change to the role "on-the-shelf" (i.e., no action 9a corresponding to the action 3a). Namely, the instance changes the role stored in its internal memory from transitional to on-the-shelf when it sends the information to MASCAS that it is empty (action 7). Otherwise, the actions in Fig. 6B are the same as those of Fig. 6A, and it is referred to the description of Fig. 6A.

In other example embodiments (not shown in Fig. 6B), MASCAS may inform the instance on the role transition from "transitional" to "on-the-shelf", too (action 9a).

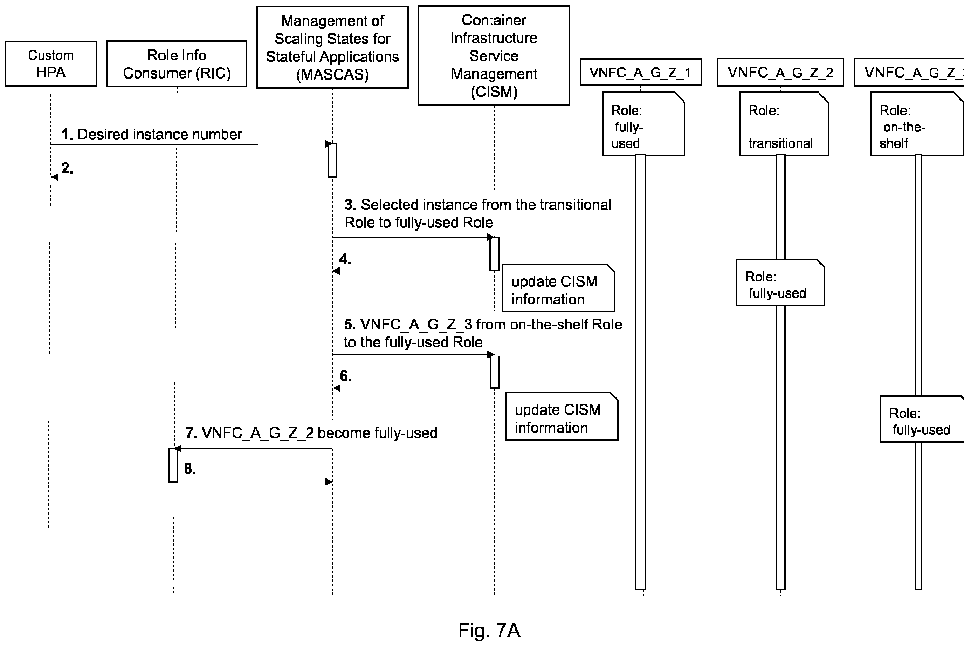

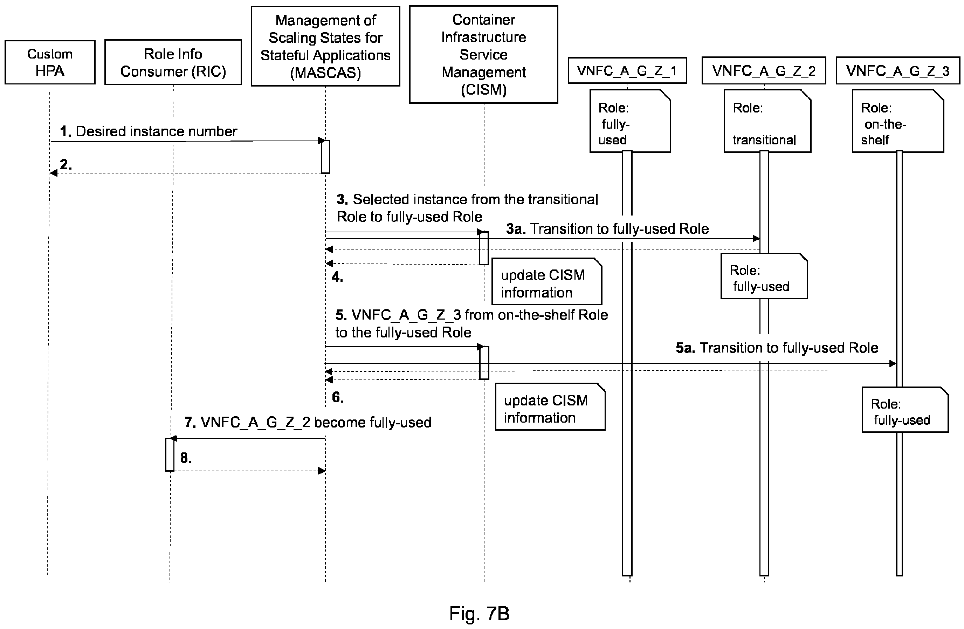

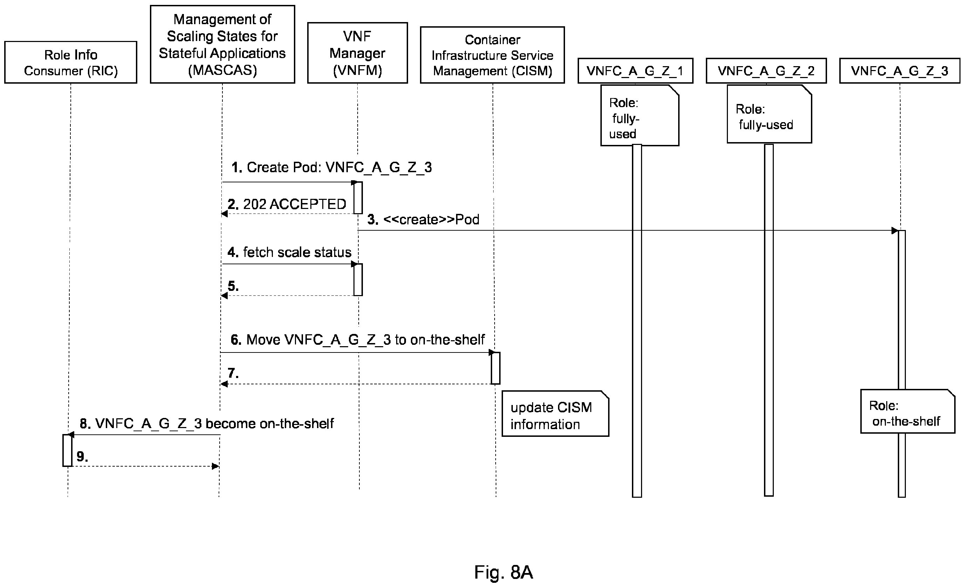

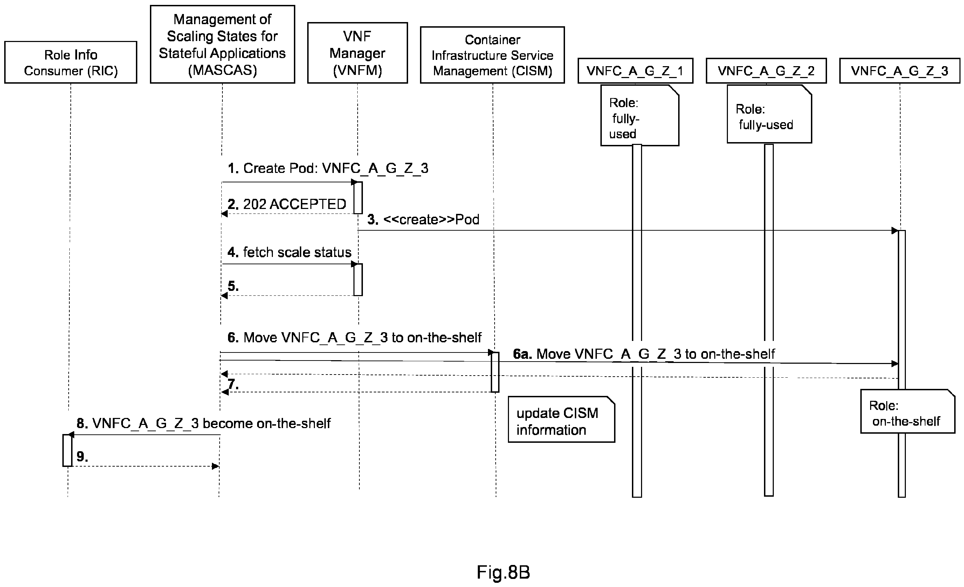

Now a scale-out process using MASCAS is described at greater detail with reference to Figs. 7A and 8A (for option 1) and Figs. 7B and 8B (for option 2). The message sequence charts of Figs. 7A and 7B and the message sequence charts of Figs. 8A and 8B correspond to other except for the differences explained further below. First the scale out process is explained with reference to Figs. 7A and 8A related to option 1.

Once the scale out process is started, let *X*ᵢ be the number of instances of type *i* that should be "fully-used" in addition to the instances that are actually "fully-used". *X*ᵢ could be computed based on the suggestion from Custom HPA and the actual number of instances in the fully-used role) and *Y*ᵢ = *Y1*ᵢ + *Y2*ᵢ denote the current number of reserved instances of type i, where *Y1*ᵢ is the number of instances in the transitional role and *Y2*ᵢ is the number of instances in the "on-the-shelf " role. The scale out process may comprise two phases:
*i)* the movement of reserved instances to the "fully-used" role (Fig. 7), and
*ii)* the launch of new instances with the "on-the-shelf" role (Fig. 8).

These phases may be performed independently from each other, one after the other, or fully or partly in parallel.

For option 1, the actions in Fig. 7A are as follows:
- Action 1: Custom HPA sends a request to MASCAS with the recommended instance number. For example, the PATCH method is as follows

   ```
PATCH /vnfs/{vnfInstanceId}/role/fully-used/scale
{
"replicas": 3 }
```
- Action 2: MASCAS acknowledges with the 200 OK response
- Action 3: MASCAS selects instances and annotates the selected instances from the Transitional role to the "fully-used" role. Then, MASCAS informs CISCM using the REST API PATCH method.
- Action 4: CISM changes the internal information about the instance and sends the acknowledgement (the 200 OK message).
- Action 5: If more instances are needed for scaling out than the number of instances in the Transitional role at the beginning of Action 3, MASCAS selects instances in the "on-the-self" and moves the selected instances from the "on-the-shelf" role to the "fully-used" role. Then MASCAS sends the REST API PATCH message to CISM, for example,

   ```
PATCH /api/v1/namespaces/{namespace}/pods/{pod-name}
metadata.labels.role = "on-the-shelf"
```
- Action 6: CISM sends the 200 OK response.
- Action 7: MASCAS notifies the subscribed Role Information Consumers that instance roles were changed. The POST message may be as follows

   ```
POST /api/v1/call-this-when-role-change
{
"fully-used": ["VNFC_A_G_Z_1","VNFC_A_G_Z_2","VNFC_A_G_Z_3"],
"transitional": [],
"on-the-shelf": [] }
```
- Action 8: Notified Role Information Consumers acknowledge MASCAS with the 200 OK message.

Load Balancer Controllers may act as RIC. Thus, they receive the role information of instances from MASCAS. Accordingly, the Load Balancer Controllers may instruct the Load Balancers to forward traffic according to the roles of the instances.

The actions for option 2 are illustrated in Fig. 7B. The difference is that MASCAS sends the role information to a respective instance upon the change (Actions 3a and 5a in Fig. 7B). Typically, MASCAS sends the role information directly to the respective instance, as shown in Fig. 7B. Otherwise, the actions in Fig. 7B are the same as those of Fig. 7A, and it is referred to the description of Fig. 7A.

For option 1, the actions in Fig. 8A are performed as a consequence from detecting that the recommended number of active instances (i.e., instances in one of the "fully-used" role and the reserved role, potentially taking into account a minimum number of instances in the reserved role) is smaller than the recommended number of active instances. The actions are as follows:
- Action 1: MASCAS detects that *N*ᵢ "on-the-shelf" instances should be created according to a policy for keeping the necessary number of reserved instances. MASCAS sends requests to the VNFM to create *N*ᵢ new instances. The request to create the instances is sent to the endpoint specified in ETSI NFV-SOL003 section 5.4.6.2 POST /api/vnflcm/vl/vnf_instances/{vnflnstanceld}/scale_to_level
- Action 2: VNFM responses to MASCAS with a 202 accepted message
- Action 3: VNFM sends the requests to other entities to create the instances. For example, this procedure may be performed as specified in the ETSI standards, but the embodiment is not limited to this specific procedure.
- Action 4: MASCAS waits until the instances are created. The current state of the instances is fetched from the endpoint specified in ETSI NFV-SOL003 section 5.4.3.2. GET /api/vnflcm/v1/vnf_instances/{vnflnstanceld}Action 5: VNFM responses with the current status of the instances

   ```
Example "scaleStatus": [
{"aspectld": "processing", "scaleLevel": "2"},
{"aspectld": "database", "scaleLevel": "3"}
]
```
- Action 6: MASCAS keeps the freshly created instances with the "on-the-shelf" role and informs CISM with the PATCH message as PATCH /api/v1/namespaces/{namespace}/pods/{pod-name} metadata.labels.role = "on-the-shelf"
- Action 7: CISM acknowledges with the 200 OK message
- Action 8: MASCAS notifies the subscribed Role Information Consumers that instance roles were changed.

   ```
POST /api/v1/call-this-when-role-change
{
"fully-used": ["VNFC_A_G_Z_1","VNFC_A_G_Z_2"],
"transitional": [],
"on-the-shelf": ["VNFC_A_G_Z_3"]
}
```
- Action 9: Notified Role Information Consumers are responding with the 200 OK message to the request.

Load Balancer Controllers may act as RIC. Thus, they receive the role information of instances from MASCAS. Accordingly, the Load Balancer Controllers may instruct the Load Balancers to forward traffic according to the roles of the instances.

The actions for option 2 are illustrated in Fig. 8B. The difference is that MASCAS sends the role information to a respective instance upon the change (Action 6a in Fig. 8B). Typically, MASCAS sends the role information directly to the respective instance, as shown in Fig. 8B. Otherwise, the actions in Fig. 8B are the same as those of Fig. 8A, and it is referred to the description of Fig. 8A.

As necessary, the newly launched instance may have the "fully-used" role or transition to the "fully-used" role after the successful launch (the actions are similar to the actions shown in Fig. 7).
- If *X*ᵢ <=*Y*ᵢ, MASCAS first moves *min(X*ᵢ*,Y1*ᵢ*)* instances from the transitional role to the "fully-used" role with steps in Figure 7, then *X*ᵢ *-min(X*ᵢ*,Y1*ᵢ*)* instances from the "on-the0shelf" role to the "fully-used" role (with steps in Figure 7). The number of instances with the "on-the-shelf" role is *Y2*ᵢ -*X*ᵢ +*min(X*ᵢ*,Y1*ᵢ*).* In addition, the consolidation to launch *N*ᵢ =*max(L*ᵢ - *Y2*ᵢ +*Xᵢ -min(X*ᵢ*,Y1*ᵢ*),0)* instances with the "on-the-shelf " role could be started as in Figure 8.
- If *X*ᵢ >*Y*ᵢ, MASCAS first moves *Y1*ᵢ instances from the transitional role to the "fully-used" role, then *Y2*ᵢ instances from the "on-the-shelf" role to the "fully-used" role (with steps in Figure 7). MASCAS detects that the number of instances with the "on-the-shelf" role needs to be filled up and creates *N*ᵢ =*X*ᵢ -*Y*ᵢ +*L*ᵢ instances with the "on-the-shelf" role (with the steps illustrated in Figure 8). Note that *X*ᵢ -*Y*ᵢ new instances with "on-the-shelf" role are moved to the "fully-used" role after the successful instantiation (with steps depicted in Figure 7).

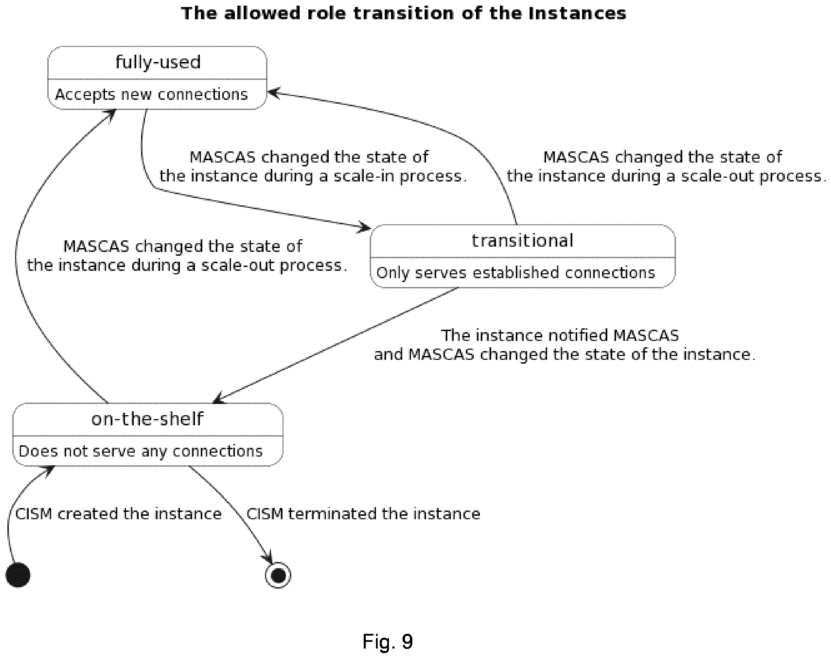

Fig. 9 shows the allowed role transitions, similarly to a state machine. Namely, an instance in the fully-used role may transition into the transitional role but not into the on-the-shelf role. Thus, it is ensured that the instance may not be terminated when it still carries traffic. From the transitional role, the instance may either return into the fully-used role or it may proceed into the on-the-shelf role. From the on-the-shelf role, the instance may return to the fully-used role, or the instance may be terminated by CISM. The instance may not return from the on-the-shelf role to the transitional role.

When CISM creates a new instance, the newly created instance may typically go into the on-the-shelf role, as shown in Fig. 9. However, depending on other conditions, the newly created instance may go into the fully-used role (not shown in Fig. 9), but it may not go into the transitional role.

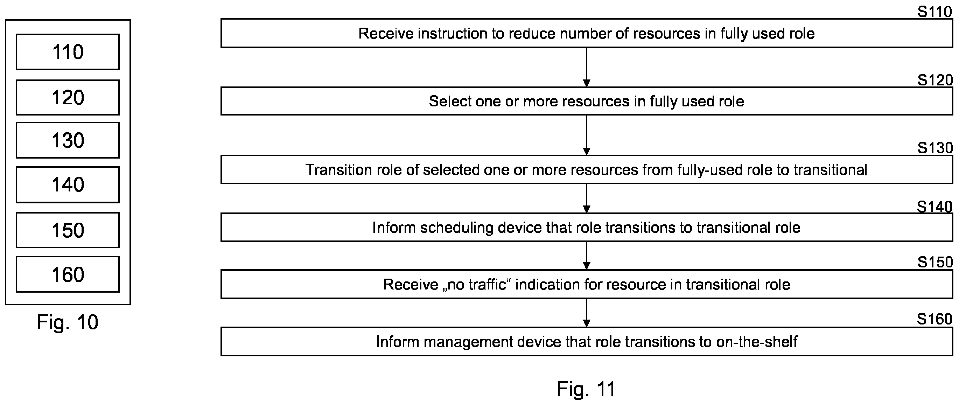

Fig. 10 shows an apparatus according to an example embodiment. The apparatus may be scaling device (such as MASCAS) or an element thereof. Fig. 11 shows a method according to an example embodiment. The apparatus according to Fig. 10 may perform the method of Fig. 11 but is not limited to this method. The method of Fig. 11 may be performed by the apparatus of Fig. 10 but is not limited to being performed by this apparatus.

The apparatus comprises first means for receiving 110, means for selecting 120, means for transitioning 130, first means for informing 140, second means for receiving 150, and second means for informing 160. The first means for receiving 110, means for selecting 120, means for transitioning 130, first means for informing 140, second means for receiving 150, and second means for informing 160 may be a first receiving means, selecting means, transitioning means, first informing means, second receiving means, and second informing means, respectively. The first means for receiving 110, means for selecting 120, means for transitioning 130, first means for informing 140, second means for receiving 150, and second means for informing 160 may be a first receiver, selector, transitioner, first informer, second receiver, and second informer, respectively. The first means for receiving 110, means for selecting 120, means for transitioning 130, first means for informing 140, second means for receiving 150, and second means for informing 160 may be a first receiving processor, selecting processor, transitioning processor, first informing processor, second receiving processor, and second informing processor, respectively.

The first means for receiving 110 receives an instruction to reduce a number of resources in a fully-used-role to an intended reduced number of resources in the fully-used-role (S110). The resources carry instances of a virtual network function. The means for selecting 120 selects one or more of the resources in the fully-used-role (S120).

The means for selecting 120 selects the one or more resources such that the number of resources in the fully-used-role becomes the intended reduced number of resources if the selected resources transition from the fully-used-role to a transitional role different from the fully-used-role.

The means for transitioning 130 transitions a role of the selected one or more resources from the fully-used role to the transitional role (S130).

In response to transitioning the role of the selected one or more resources from the fully-used role to the transitional role in S130, the first means for informing 140 informs a scheduling device that the role of the one or more resources transitions to the transitional role (S140). According to configuration information available to the apparatus, the scheduling device is responsible for scheduling traffic on the one or more resources; the scheduling device may be a load balancer controller or a load balancer.

The second means for receiving 150 receives an indication that a first resource of the one or more resources in the transitional role does not carry any traffic (S150). In response to receiving the indication that the first resource does not carry any traffic of S150, the second means for informing 160 informs a management device of the resources and the scheduling device that the role of the first resource transitions to the on-the-shelf role (S160). For each of the resources, the respective resource being in the on-the-shelf role indicates that the respective resource does not carry any traffic. According to the configuration information, the management device is responsible for a life cycle of the one or more resources. The management device may be a CISM.

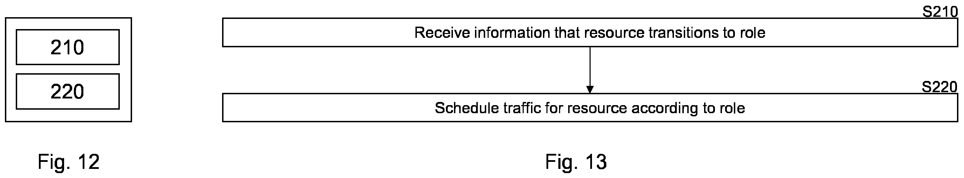

Fig. 12 shows an apparatus according to an example embodiment. The apparatus may be management device (such as a CISM) or an element thereof. Fig. 13 shows a method according to an example embodiment. The apparatus according to Fig. 12 may perform the method of Fig. 13 but is not limited to this method. The method of Fig. 13 may be performed by the apparatus of Fig. 12 but is not limited to being performed by this apparatus.

The apparatus comprises means for receiving 210 and means for scheduling 220. The means for receiving 210 and means for scheduling 220 may be a receiving means and scheduling means, respectively. The means for receiving 210 and means for scheduling 220 may be a receiver and scheduler, respectively. The means for receiving 210 and means for scheduling 220 may be a receiving processor and scheduling processor, respectively.

The means for receiving 210 receives an information that a resource transitions to a role (S210). In response to receiving the information that the resource transitions to the role of S210, the means for scheduling 220 schedules traffic for the resource according to the role (S220).

Namely:
if the role is a fully-used role, it is allowed to schedule new traffic and existing traffic for the resource;
if the role is a transitional role, it is allowed to schedule existing traffic for the resource and inhibited to schedule new traffic for the resource;
if the role is an on-the-shelf role, it is inhibited to schedule existing traffic for the resource and inhibited to schedule new traffic for the resource.

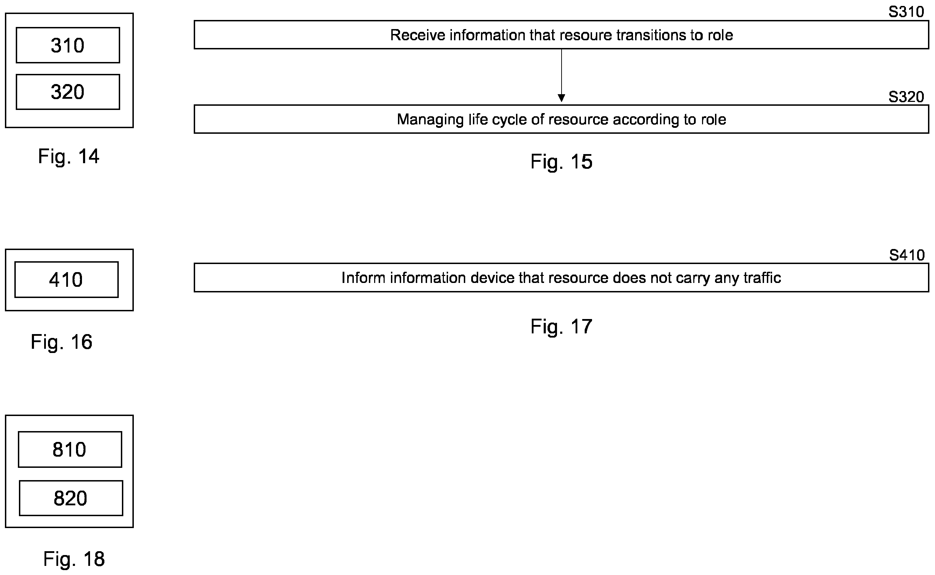

Fig. 14 shows an apparatus according to an example embodiment. The apparatus may be management device (such as a CISM) or an element thereof. Fig. 15 shows a method according to an example embodiment. The apparatus according to Fig. 14 may perform the method of Fig. 15 but is not limited to this method. The method of Fig. 15 may be performed by the apparatus of Fig. 14 but is not limited to being performed by this apparatus.

The apparatus comprises means for receiving 310 and means for managing 320. The means for receiving 310 and means for managing 320 may be a receiving means and managing means, respectively. The means for receiving 310 and means for managing 320 may be a receiver and manager, respectively. The means for receiving 310 and means for managing 320 may be a receiving processor and managing processor, respectively.

The means for receiving 310 receives an information that a resource transitions to a role (S310). In response to receiving the information that the resource transitions to the role of S310, the means for managing 320 manages a life cycle of the resource according to the role (S320).

Namely:
if the role is a non-on-the-shelf role, it is inhibited to de-activate the resource;
if the role is an on-the-shelf role different from the non-on-the-shelf role, it is allowed to de-activate the resource.

Fig. 16 shows an apparatus according to an example embodiment. The apparatus may be resource (such as a container) or an element thereof. Fig. 17 shows a method according to an example embodiment. The apparatus according to Fig. 16 may perform the method of Fig. 17 but is not limited to this method. The method of Fig. 17 may be performed by the apparatus of Fig. 16 but is not limited to being performed by this apparatus.

The apparatus comprises means for informing 410. The means for informing 410 may be an informing means. The means for informing 410 may be an informer. The means for informing 410 may be an informing processor.

The means for informing 410 informs an information device (such as MASCAS) that a resource does not carry any traffic (S410).

Fig. 18 shows an apparatus according to an example embodiment. The apparatus comprises at least one processor 810, at least one memory 820 storing instructions that, when executed by the at least one processor 810, cause the apparatus at least to perform the method according to at least one of the following figures and related description: Fig. 11, or Fig. 13, or Fig. 15, or Fig. 17.

Some example embodiments are explained for containers as resources. In some example embodiments, virtual machines or a mixture of virtual machines and containers may be considered as resources. A virtual machine (VM) is the virtualization or emulation of a computer system.

Kubernetes is an example of a management system for containers. However, according to some example embodiments, other management systems for containers and/or VMs may be deployed.

Some example embodiments are explained with respect to 5G (NR). However, other example embodiments may be employed in other 3GPP generations, such as 4G, 6G, 7G, etc., in other wireless or wired communication devices, and in other systems employing containers.

A UE is an example of a terminal. Other examples are MTC devices. Each of the terminals may be implemented as a smartphone, a mobile phone, a laptop, a sensor device etc. Typical terminals are cellular communication devices for communicating in a cellular network (such as a 3GPP network), but this is not mandatory.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments provide, for example, a scaling device (such as a MASCAS) or an element thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, a management device (such as a CISM or a VIM) or an element thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, a resource (such as a container, a pod, or a VM) or an element thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the disclosure as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

## Claims

1. Apparatus comprising:
means for receiving an instruction to reduce a number of resources in a fully-used role carrying instances of a virtual network function to an intended reduced number of resources in the fully-used role carrying instances of the virtual network function;
means for selecting one or more of the resources in the fully-used role, wherein the one or more resources are selected such that the number of resources in the fully-used role becomes the intended reduced number of resources if the selected resources transition from the fully-used role to a transitional role;
means for transitioning a role of the selected one or more resources from the fully-used role to the transitional role, wherein a reserved role comprises the transitional role and an on-the-shelf role,
means for informing a scheduling device that the role of the one or more resources transitions to the transitional role in response to transitioning the role of the selected one or more resources from the fully-used role to the transitional role;
means for receiving an indication that a first resource of the one or more resources in the transitional role does not carry any traffic;
means for informing a management device of the resources and the scheduling device that the role of the first resource transitions to the on-the-shelf role in response to receiving the indication that the first resource does not carry any traffic; wherein
for each of the resources, the respective resource being in the on-the-shelf role indicates that the respective resource does not carry any traffic;
according to configuration information available to the apparatus, the scheduling device is responsible for scheduling traffic on the one or more resources;
according to the configuration information, the management device is responsible for a life cycle of the one or more resources.

2. The apparatus according to claim 1, further comprising:
means for informing the management device that the role of the one or more resources transitions to the transitional role in response to transitioning the role of the selected one or more resources from the fully-used role to the transitional role.

3. The apparatus according to any of claims 1 to 2, further comprising:
means for receiving a second instruction to increase the number of the resources in the fully-used role carrying instances of the virtual network function to an intended increased number of resources in the fully-used role carrying instances of the virtual network function;
means for determining a number difference between the intended increased number of resources in the fully-used role carrying instances of the virtual network function and the number of the resources in the fully-used role carrying instances of the virtual network function;
means for choosing one or more of the resources in the reserved role, wherein the number of the chosen resources is equal to or smaller than the number difference;
means for transitioning the chosen one or more of the resources from the reserved role to the fully-used role;
means for informing the scheduling device and the management device that the chosen one or more of the resources transition from the reserved role to the fully-used role in response to the transitioning the chosen one or more of the resources from the reserved role to the fully-used role.

4. The apparatus according to claim 3, further comprising, for each of the chosen one or more resources:
means for checking whether the respective resource transitions from the transitional role to the fully-used role;
means for inhibiting the informing the management device that the respective resource transitions from the reserved role to the fully-used role in response to checking that the respective resource transitions from the transitional role to the fully-used role.

5. The apparatus according to any of claims 3 and 4, wherein the number of the chosen resources is smaller than the number difference, and further comprising
means for instructing the management device to activate one or more resources and assigning the fully-used role to the activated one or more resources such that the number of the resources in the fully-used role carrying instances of the virtual network function becomes equal to the intended increased number;
means for informing the scheduling device on the activated one or more resources in the fully-used role.

6. The apparatus according to claim 5, wherein a total number of resources in the reserved role at a time when the one or more resources in the reserved role are chosen is smaller than the number difference.

7. The apparatus according to any of claims 1 to 6, further comprising:
means for informing a device to be informed that the role of one of the resources transitions from a first role to a second role different from the first role, wherein the first role comprises any of the fully-used role, the transitional role, and the on-the-shelf role, and the second role comprises any of the fully-used role, the transitional role, and the on-the-shelf role.

8. The apparatus according to claim 7, further comprising:
means for receiving a subscription for a notification from the device to be informed;
means for informing the device to be informed that the role of the one of the resources transitions from the first role to the second role by issuing the notification.

9. The apparatus according to any of claims 7 and 8, wherein the device to be informed comprises the one of the resources.

10. The apparatus according to any of claims 1 to 9, further comprising, for each of the one or more resources:
means for checking whether the respective resource is in the on-the shelf role;
means for inhibiting to instruct the management device to destroy the respective resource in response to checking that the respective resource is not in the on-the-shelf role.

11. Apparatus comprising:
means for receiving an information that a resource transitions to a role;
means for scheduling traffic for the resource according to the role in response to receiving the information that the resource transitions to the role; wherein
if the role is a fully-used role, it is allowed to schedule new traffic and existing traffic for the resource;
if the role is a transitional role, it is allowed to schedule existing traffic for the resource and inhibited to schedule new traffic for the resource;
if the role is an on-the-shelf role, it is inhibited to schedule existing traffic for the resource and inhibited to schedule new traffic for the resource.

12. Apparatus comprising:
means for receiving an information that a resource transitions to a role;
means for managing a life cycle of the resource according to the role in response to receiving the information that the resource transitions to the role; wherein
if the role is a non-on-the-shelf role, it is inhibited to de-activate the resource;
if the role is an on-the-shelf role different from the non-on-the-shelf role, it is allowed to de-activate the resource.

13. Apparatus comprising:
means for informing an information device that a resource does not carry any traffic,
means for receiving an information that the resource is in one of a transitional role or a non-transitional role different from the transitional role;
means for inhibiting the informing the information device that the resource does not carry any traffic in response to receiving the information that the resource is in the non-transitional role.

14. Method comprising:
receiving an instruction to reduce a number of resources in a fully-used role carrying instances of a virtual network function to an intended reduced number of resources in the fully-used role carrying instances of the virtual network function;
selecting one or more of the resources in the fully-used role, wherein the one or more resources are selected such that the number of resources in the fully-used role becomes the intended reduced number of resources if the selected resources transition from the fully-used role to a transitional role;
transitioning a role of the selected one or more resources from the fully-used role to the transitional role, wherein a reserved role comprises the transitional role and an on-the-shelf role,
informing a scheduling device that the role of the one or more resources transitions to the transitional role in response to transitioning the role of the selected one or more resources from the fully-used role to the transitional role;
receiving an indication that a first resource of the one or more resources in the transitional role does not carry any traffic;
informing a management device of the resources and the scheduling device that the role of the first resource transitions to the on-the-shelf role in response to receiving the indication that the first resource does not carry any traffic; wherein
for each of the resources, the respective resource being in the on-the-shelf role indicates that the respective resource does not carry any traffic;
according to configuration information available to an apparatus performing the method, the scheduling device is responsible for scheduling traffic on the one or more resources;
according to the configuration information, the management device is responsible for a life cycle of the one or more resources.

15. Method comprising:
receiving an information that a resource transitions to a role;
scheduling traffic for the resource according to the role in response to receiving the information that the resource transitions to the role; wherein
if the role is a fully-used role, it is allowed to schedule new traffic and existing traffic for the resource;
if the role is a transitional role, it is allowed to schedule existing traffic for the resource and inhibited to schedule new traffic for the resource;
if the role is an on-the-shelf role, it is inhibited to schedule existing traffic for the resource and inhibited to schedule new traffic for the resource.

16. Method comprising:
receiving an information that a resource transitions to a role;
managing a life cycle of the resource according to the role in response to receiving the information that the resource transitions to the role; wherein
if the role is a non-on-the-shelf role, it is inhibited to de-activate the resource;
if the role is an on-the-shelf role different from the non-on-the-shelf role, it is allowed to de-activate the resource.

17. Method comprising:
informing an information device that a resource does not carry any traffic.
